# FASCICULE DE BREVET EUROPEEN

(11) **EP 3 106 699 B1**
(45) Date de publication et mention de la délivrance du brevet: **29.03.2023**
(21) Numéro de dépôt: 16173462.9
(22) Date de dépôt: 08.06.2016
(51) Int. Cl.: F16D 48/06

(54) **PROCÉDÉ ET SYSTÈME DE CONTRÔLE D'UN EMBRAYAGE MÉCANIQUE À ACTIONNEMENT MOTORISÉ**
KONTROLLVERFAHREN UND -SYSTEM EINER MECHANISCHEN KUPPLUNG MIT MOTORISIERTER BETÄTIGUNG
METHOD AND SYSTEM FOR CONTROLLING A MECHANICAL CLUTCH WITH MOTORISED ACTUATION

(30) Priorité: 16.06.2015 FR 1555488
(43) Date de publication de la demande: 21.12.2016
(73) Titulaire: Renault s.a.s, 92100 Boulogne Billancourt (FR)
(72) Inventeur: HORTER, Nicolas, 91700 SAINTE GENEVIEVE DES BOIS (FR); RIESENMEY, Fabrice, 91780 CHALO SAINT MARS (FR)
(74) Mandataire: Renault Group

(56) Documents cités:
- EP-A1- 0 997 659
- DE-A1-102012 019 895
- DE-U1-202013 003 648
- GB-A- 2 506 674
- US-A1- 2010 063 699

## Description

La présente invention concerne un procédé de contrôle d'un embrayage mécanique à actionnement motorisé et un système de contrôle d'un tel embrayage pour la mise en oeuvre de ce procédé.

L'invention concerne aussi un programme d'ordinateur et un véhicule comprenant un tel système.

Dans la suite de ce document on mentionne un conducteur d'un véhicule automobile dans l'exemple décrit dans le but de simplifier la description de l'invention. Il convient de comprendre que ledit conducteur est un opérateur d'une commande d'embrayage.

Dans les systèmes de contrôle d'un embrayage mécanique à actionnement motorisé de l'état de l'art, voir les documents US2010/063699, DE102012019895 et DE202013003648, un tel embrayage également appelé embrayage pilotée, est généralement destiné à assurer la transmission d'un couple issu d'un arbre de sortie du moteur thermique tel qu'un vilebrequin, vers un arbre de transmission de puissance. Ainsi, cet embrayage peut alterner entre deux positions extrêmes :
- une position débrayée dans laquelle aucun couple n'est transmis aux roues du véhicule, et
- une position embrayée dans laquelle tout le couple fourni par le moteur est transmis aux roues *via* la boîte de vitesse.

Pour réaliser la transmission de ce couple, l'embrayage comporte :
- un premier plateau ou volant moteur solidaire de l'arbre moteur ou vilebrequin comportant une face de garniture ou de friction ;
- un disque d'embrayage qui est solidarisé en rotation à l'arbre primaire d'entrée (primaire) d'une boîte de vitesses par exemple par des cannelures, ledit disque est monté coulissant sur l'arbre primaire et vient frotter contre la première face de garniture du premier plateau par l'intermédiaire :
   - d'une cloche fixée sur le premier plateau, et
   - d'un deuxième plateau ou plateau de pression monté coulissant dans la cloche.

Le disque d'embrayage vient frotter sur le deuxième plateau par l'intermédiaire d'une deuxième face de garniture. Le disque d'embrayage et le deuxième plateau font partie des éléments de friction de l'embrayage. Un élément de commande d'embrayage tel qu'une butée d'embrayage contrôle le coulissement du deuxième plateau pour serrer le disque d'embrayage entre les deux plateaux dans la position embrayée.

Afin que cet embrayage puisse alterner entre les positions débrayée et embrayée, de tels systèmes de contrôle prévoient un pilotage de l'embrayage selon différentes stratégies reposant principalement sur des paramètres définis en fonction de la volonté du conducteur du véhicule.

Dans ce contexte, un inconvénient majeur de ces systèmes de contrôle est lié au fait que ces stratégies ne prennent pas en compte une phase d'embrayage trop rapide qui peut avoir des conséquences importantes sur la fiabilité du fonctionnement de l'embrayage. En effet, la chaine cinématique comportant l'embrayage est dimensionnée en fonction du couple maximum qu'elle pourra voir passer durant la vie du véhicule, et une telle phase d'embrayage peut générer un à-coup de couple, destructeur d'un ou plusieurs composants de ladite chaine cinématique, par exemple la denture de la boite de vitesses, des éléments de transmission, des joints de transmissions, des ressorts du double volant amortisseur de l'embrayage pouvant entraîner une immobilisation du véhicule.

La présente invention vise à pallier ces inconvénients liés aux systèmes et procédés de contrôle d'un embrayage mécanique à actionnement motorisé d'un véhicule de l'état de l'art.

L'invention a pour but de proposer un système et un procédé de contrôle d'un embrayage mécanique à actionnement motorisé qui permettent d'optimiser la durée de vie de l'embrayage en diminuant de façon sensible les méfaits de phases rapides d'embrayage et donc l'usure de ce dernier.

Dans ce dessein, l'invention concerne un procédé de contrôle d'un embrayage mécanique à actionnement motorisé d'un véhicule comprenant les étapes consécutives telles que définies par les revendications 1-5.

En outre, le procédé comporte une étape de comparaison de la vitesse d'actionnement de la commande d'embrayage par le conducteur par rapport à un seuil de vitesse d'actionnement prédéfini pour éviter des actionnements trop rapides de la commande d'embrayage pouvant conduire à une détérioration rapide des garnitures de l'embrayage et/ou de la chaîne cinématique de transmission comprenant l'embrayage. Lorsque la vitesse d'actionnement de la commande d'embrayage dépasse sensiblement un seuil de vitesse d'actionnement, le procédé active une consigne de commande d'embrayage selon un profil d'embrayage prédéfini de façon indépendante à la commande initiale par le conducteur afin de protéger le dispositif d'embrayage.

Selon d'autres caractéristiques de l'invention :
- le seuil de vitesse d'actionnement d'embrayage dépend du régime du moteur.
- le seuil de vitesse d'actionnement de la commande d'embrayage dépend du régime moteur pour prendre en compte des conséquences plus ou moins importantes des actionnements plus ou moins rapides selon différentes plages de fonctionnement du moteur.
- le profil prédéfini d'actionnement d'embrayage dépend du régime du moteur.

De manière avantageuse, le procédé comporte plusieurs profils prédéfinis d'actionnement de la commande d'embrayage pour différents régime du moteur pour permettre des réponses adéquates de l'embrayage selon différents régimes du moteur et en améliorant la fiabilité de l'embrayage.
- le profil prédéfini d'actionnement d'embrayage selon l'invention autorise une durée de la phase d'embrayage supérieure à une durée minimale.

Le profil prédéfini autorise une durée de la phase d'embrayage supérieure à une durée minimale pour permettre une mise en contact des moyens de friction du système d'embrayage en douceur.
- la durée minimale de l'actionnement de l'embrayage dépend du régime moteur.

De manière avantageuse, la durée minimale de l'actionnement de l'embrayage dépend du régime moteur, par exemple ladite durée peut être réduite lorsque le régime moteur monte dans les tours.

L'invention concerne aussi un système de contrôle d'un embrayage mécanique à actionnement motorisé d'un véhicule pour la mise en oeuvre de ce procédé, comprenant :
- une unité de traitement comportant des ressources matérielles et logicielles ;
- un module d'actionnement d'embrayage ;
- au moins un capteur d'information, et
- une unité de contrôle moteur,
l'unité de traitement étant reliée au module d'actionnement d'embrayage, à l'unité de contrôle et audit au moins un capteur d'information.

Avantageusement, le système comprend :
- un premier élément de commande, notamment une pédale d'embrayage ;
- un deuxième élément de commande, notamment une butée d'embrayage ;
- un module de diffusion ;
- un premier capteur de position du premier élément de commande, et/ou
- un deuxième capteur de position du deuxième élément de commande.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- la figure 1 est une représentation schématique du système de contrôle d'un embrayage mécanique à actionnement motorisé selon le mode de réalisation de l'invention ;
- la figure 2 est un logigramme relatif au procédé de contrôle d'un embrayage mécanique à actionnement motorisé selon le mode de réalisation de l'invention ;
- la figure 3 représente une courbe relative à une course d'embrayage à un régime moteur du véhicule selon le mode de réalisation de l'invention ;

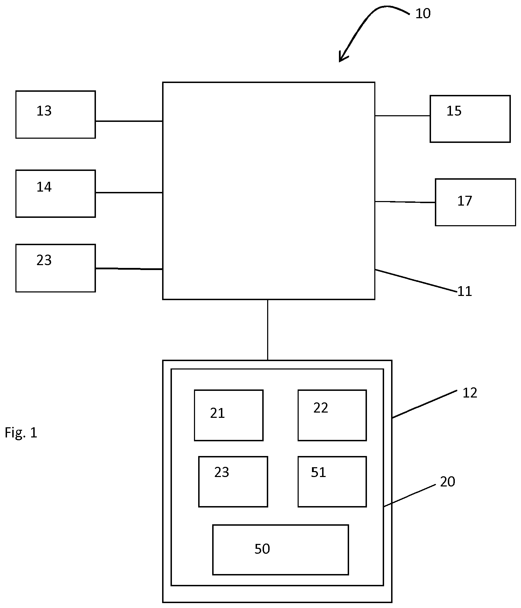

Sur la figure 1, le système 10 de contrôle d'un embrayage mécanique à actionnement motorisé comprend de manière non exhaustive et non limitative l'ensemble des éléments suivants :
- une unité de traitement 11 ;
- une unité d'entraînement 12 ;
- des premier et deuxième capteurs de position 13, 14 ;
- un premier élément de commande 15 d'embrayage et un deuxième élément de commande 23;
- au moins un capteur d'information 17.

Dans ce système 10, l'unité de traitement 11 est reliée à chaque élément de cet ensemble. En particulier, on notera que dans la mesure où chaque élément de cet ensemble et l'unité de traitement 11 sont agencés de manière séparée du point de vue construction et/ou du point de vue fonctionnel, chacun de ces éléments et l'unité de traitement 11 peuvent être reliés entre eux par un réseau par exemple au moyen d'un bus CAN ou d'une autre liaison électrique pour l'échange de données.

Dans ce système 10, l'unité d'entraînement 12 comporte un groupe motopropulseur comprenant un moteur 50, une unité d'embrayage 20 formée d'au moins un embrayage 21, de la boîte de vitesse 51, d'un module d'actionnement 22 d'embrayage et d'un deuxième élément de commande 23. Cette unité d'embrayage 20 comprend une mécanique traditionnelle, commandés, non pas par un conducteur du véhicule, mais par l'unité de traitement 12.

La boite de vitesse n'est toutefois pas indispensable dans l'invention notamment pour des moteurs électriques. L'embrayage 21 est nécessaire pour ouvrir ou fermer la chaine cinématique alors que la boite de vitesse autorise des modifications de couple et de régime.

Dans cette configuration de l'unité d'entraînement 12, un couple moteur est transmis aux roues par un arbre de transmission. L'embrayage 21 est représenté par un plateau de pression coopérant avec un volant moteur qui est susceptible de recevoir le couple moteur, un disque d'embrayage, muni d'une timonerie, le disque mené étant rendu solidaire de la boîte de vitesse 51 par l'arbre d'entrée de la boîte de vitesse 51, autrement appelé arbre primaire d'entrée. Le volant moteur est monté sur un vilebrequin du moteur 50.

Dans ce système 10, l'embrayage 21 est piloté électroniquement par l'unité de traitement 11 qui est reliée au module d'actionnement 22 d'embrayage.

Cette unité de traitement 11 comprend au moins une unité de calcul comportant des ressources matérielles et logicielles plus précisément au moins un processeur coopérant avec des éléments de mémoire (non représentés). Cette unité de calcul est apte à exécuter des instructions pour la mise en oeuvre d'un programme d'ordinateur.

Le module d'actionnement 22 d'embrayage peut être par exemple de type :
- électro-hydraulique avec une fourchette, c'est-à-dire comportant une électrovanne proportionnelle en débit, un vérin d'embrayage et une liaison au deuxième élément de commande 23 d'embrayage, ici la butée d'embrayage, par un câble mécanique actionnant un bras de levier mécanique ;
- électro-hydraulique avec un vérin esclave (CSC), c'est-à-dire comportant une électrovanne proportionnelle en débit, avec ou sans vérin émetteur, une liaison hydraulique et un vérin esclave ;
- électro-mécanico-hydraulique, comportant un moteur électrique, un transformateur de mouvement, un vérin émetteur, une liaison hydraulique et un vérin esclave ;
- électrique, c'est-à-dire un moteur électrique qui agit sur le deuxième élément de commande 23 d'embrayage, ici la butée d'embrayage, au moyen d'un système de démultiplication approprié.

Le système 10 comprend au moins un capteur d'information 17 du régime moteur, par exemple il peut s'agir d'un capteur d'une vitesse de rotation de l'arbre du moteur 50, permettant de déterminer ensuite le régime moteur.

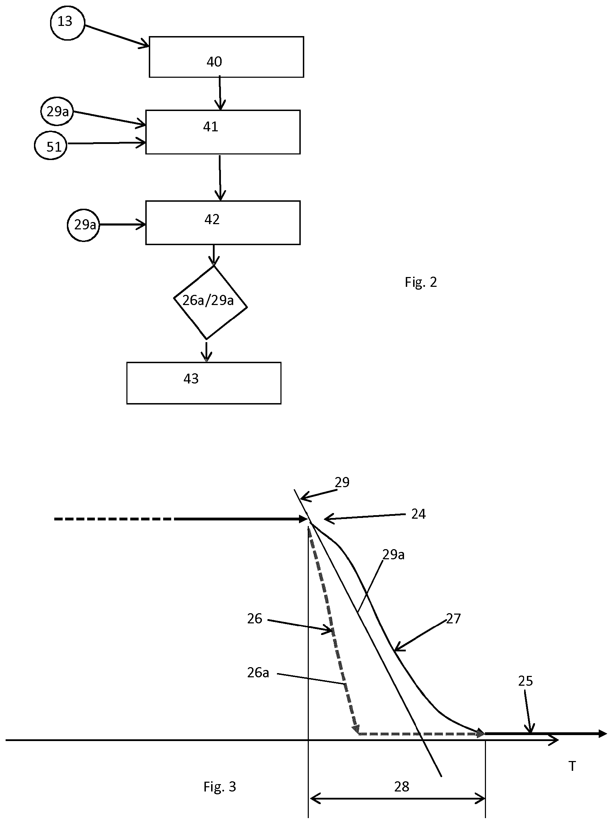

Le système 10 est apte à mettre en oeuvre un procédé de contrôle d'un embrayage 21 mécanique à actionnement motorisé visible sur la figure 2.

Selon la figure 2, le procédé comprend :
- une première étape de détermination 40 par l'unité de traitement 12 d'une consigne maître Cm de pilotage de l'unité d'embrayage 20 et en particulier de l'embrayage 21 qui est conforme à la volonté du conducteur du véhicule. Lors de cette étape de détermination 40, l'unité de traitement 12 est apte à générer une telle consigne maître Cm dès lors qu'il reçoit en étant reliée au premier capteur de position 13, une mesure d'une position absolue du premier élément de commande 15 d'embrayage. On notera que l'information délivrée par le premier capteur de position 13 est transmise soit directement, soit par le réseau à l'unité de traitement 12.
- une deuxième étape 41 consécutive de validation de la consigne maitre Cm de pilotage de l'unité d'embrayage par l'unité de traitement 12. La validation de la consigne maître est effectuée selon la vitesse d'actionnement de la commande d'embrayage. On entend par commande d'embrayage une commande vers le module d'actionnement 22 de l'embrayage. En effet si la vitesse d'actionnement est supérieure à un seuil de vitesse prédéfini, alors l'unité de traitement 11 est apte à redéfinir une consigne de pilotage de l'embrayage selon un profil prédéfini d'embrayage de protection du système d'embrayage. On entend par profil d'embrayage une séquence ou une succession de séquences d'une phase d'embrayage c'est-à-dire pour faire passer l'embrayage 21 de l'état ouvert ou débrayé à l'état fermé ou embrayé. De manière préférentielle, le seuil de vitesse peut dépendre du régime moteur.
- une troisième étape consécutive de détermination du profil 42 d'embrayage adéquat. Afin de réduire les inconvénients d'une phase d'embrayage trop brutale ou effectuée en un temps trop court, l'unité de traitement 11 est apte à déterminer une durée minimale de ladite phase d'embrayage et/ou un profil de la phase d'embrayage. De manière préférentielle, ladite durée minimale et/ou ledit profil d'embrayage sont fonction du régime moteur.
- une quatrième étape consécutive d'application 43 de la consigne d'embrayage. De manière préférentielle, l'unité de traitement 11 peut commander la phase d'embrayage en contrôlant l'unité d'embrayage 20 pour le rapprochement des éléments de friction de l'embrayage 21.

On notera que dans le cadre du mode de réalisation décrit, on considère que le véhicule comprend comme premier élément de commande 15 de l'embrayage un moyen d'actionnement de l'ouverture 24 /fermeture 25 de l'embrayage 21, par exemple une pédale d'embrayage.

Le capteur de position 13 mesure le déplacement du premier élément de commande de l'embrayage par exemple la position angulaire de la pédale d'embrayage permettant ainsi de détecter plusieurs degrés d'enfoncement de cette pédale d'embrayage. Le capteur adresse ensuite les informations à l'unité de traitement 11 qui est apte à déduire la vitesse de déplacement dudit premier élément de commande 15 et à la comparer à différents seuils de vitesse de déplacement qui dépendent du régime du moteur.

Dans ce système 1, l'unité de traitement 11 est apte à contribuer à la réalisation des fonctions de passage de vitesses en contrôlant l'embrayage 21. En particulier, elle effectue le calcul de la vitesse d'actionnement du premier élément de commande d'embrayage 15 par le conducteur, elle détermine aussi le régime moteur, par exemple à partir du régime arbre primaire de la boîte de vitesse 51 (ou autre vitesse coté transmission), pour en déduire un seuil de vitesse d'actionnement de la commande d'embrayage avec le régime moteur en place et effectue la comparaison entre la vitesse d'actionnement du premier élément de commande d'embrayage par le conducteur et ledit seuil de vitesse d'actionnement autorisé. Pour ce faire, l'unité de traitement 11 possède en mémoire par exemple une table reliant des plages de régime moteur avec des valeurs de seuils de vitesses d'actionnement du premier élément de commande 15 et des durées minimales des phases d'embrayage.

La figure 3 représente des phases d'actionnement de l'embrayage en fonction du temps t. Le conducteur active le premier élément de commande 15, ici la pédale d'embrayage, dans une volonté de provoquer la fermeture de l'embrayage 21. Selon les circonstances, le pied dudit conducteur lâche son emprise sur le premier élément de commande 15 de façon involontaire par exemple une glissade du pied en appui sur la pédale d'embrayage ou volontaire par méconnaissance des effets, ce qui produit un déplacement du premier élément de commande 15 d'embrayage jusqu'à un point de butée pendant un temps très court entrainant l'embrayage de la position ouverte 24 à la position fermée dans un temps très court selon un premier schéma d'embrayage 26. L'unité de traitement 11 peut alors vérifier si la vitesse d'actionnement dudit premier élément de commande d'embrayage effectuée par le conducteur est inférieure ou non à un seuil de vitesse d'actionnement de l'embrayage prédéfini au même régime du moteur. Si la vitesse d'actionnement d'embrayage 26a est supérieure au seuil de vitesse d'actionnement d'embrayage 29a au même régime du moteur, l'unité de traitement prend la main et autorise un actionnement de l'embrayage selon un profil d'embrayage prédéfini 27. Les vitesses d'actionnement 26a ou de seuil 29a sont représentées par les pentes des courbes de déplacement 26, 29, 27 de la butée d'embrayage 23 depuis la positon ouverte 24 vers la position fermée 25. De manière préférentielle, la phase d'embrayage est effectuée pendant une durée minimale 28 d'actionnement associée au régime moteur. La fermeture de l'embrayage s'effectue alors de façon moins brutale. Les éléments de friction sont rapprochés selon une courbe de déplacement axial.

L'unité de traitement 11 est apte à contrôler l'embrayage pour le rapprochement et le contact des éléments de friction à l'aide du capteur de position 14 du deuxième élément de commande 23, cette phase dure au moins toute la durée minimale prédéfinie 28.

Selon un mode de réalisation, le deuxième capteur de position 14 donne la position initiale du deuxième élément de commande 23 de l'embrayage ; cette position initiale définit le point de départ de la phase de rapprochement des éléments de friction. L'unité de traitement 11 déduit alors la distance à parcourir pour les éléments de friction et avec la connaissance du régime moteur, l'unité de traitement 11 déduit la durée minimale de la phase d'embrayage, la valeur de la durée minimale étant contenue dans une table dans la mémoire de l'unité de traitement. L'unité de traitement peut alors par exemple définir le rapprochement des éléments de friction selon au moins deux tronçons de parcours effectués pendant un intervalle de temps ; le rapport de cet intervalle de temps sur la durée minimale est sensiblement identique avec le rapport de la longueur du tronçon à parcours sur la longueur totale de parcours.

Selon un autre mode de réalisation, le déplacement des éléments de friction peut être contrôlé par la mise en oeuvre un mécanisme de contrôle de rapprochement ou de coulissement des éléments de friction à partir d'un algorithme de calcul de type PID (acronyme de « Proportionnelle Intégrale et Dérivée ») ou simplement PI (acronyme de « Proportionnelle Intégrale »). Par séquence, l'unité de traitement autorise le déplacement/rapprochement des éléments de friction, vérifie la position desdits éléments et effectue une correction à l'étape suivante pour se rapprocher au plus près de la courbe d'embrayage désirée ce qui optimise la fiabilité du système d'embrayage.

En cas d'absence de l'information du régime moteur, par exemple, en cas d'absence de capteur de vitesse de rotation de l'arbre moteur, l'unité de traitement peut prendre en compte une durée minimale de la phase d'embrayage égale à un seuil de durée de protection qui peut être une valeur moyenne de durée pour toute la plage de régime moteur.

Ainsi l'invention permet d'augmenter de manière significative la durée de vie des éléments constitutifs de l'embrayage 20 et en particulier de la garniture de friction du disque d'embrayage. On notera que l'invention peut être aisément mise en oeuvre dans tous types de véhicules à pilotage robotisé d'embrayage : véhicule particulier, utilitaire, engin de travaux public, véhicule militaire, véhicule maritime ou véhicule aéronautique.

L'invention concerne également le programme d'ordinateur comprenant des instructions de code de programme pour l'exécution des étapes du procédé de contrôle de l'embrayage mécanique à actionnement motorisé du véhicule. Dans ce mode de réalisation, ce programme est exécuté par l'unité de traitement 11.

La présente invention n'est pas limitée au mode de réalisation qui a été explicitement décrit, mais elle en inclut les diverses variantes et généralisations contenues dans le domaine des revendications ci-après.

## Revendications

1. Procédé de contrôle d'un embrayage (20,21) mécanique à actionnement motorisé d'un véhicule comprenant les étapes suivantes :
- détermination (40) d'une consigne maître (Cm) de pilotage de l'embrayage (21) depuis un actionnement d'une commande d'embrayage (13);
- Validation de la consigne d'embrayage (41) selon un seuil de vitesse (29a) d'actionnement d'embrayage,
- détermination d'un profil d'actionnement d'embrayage (42) selon un seuil de vitesse d'actionnement (29a) de la commande, le profil d'actionnement d'embrayage autorisant une durée de la phase d'embrayage supérieure à une durée minimale d'embrayage déterminée en fonction du régime moteur,
- application (43) du profil d'embrayage prédéfini en cas de dépassement du seuil de vitesse d'actionnement (29a) de la commande d'embrayage.

2. Procédé selon la revendication précédente, **caractérisé en ce que** le seuil de vitesse d'actionnement (29) d'embrayage dépend du régime du moteur.

3. Procédé selon l'une quelconques des revendications 1 ou 2, **caractérisé en ce que** le profil prédéfini (27) d'actionnement d'embrayage dépend du régime du moteur.

4. Procédé selon l'une quelconque des revendications précédentes, **caractérisé en ce que** le profil prédéfini d'actionnement (29) d'embrayage autorise une durée de la phase d'embrayage supérieure à la durée minimale (28).

5. Procédé selon l'une quelconque des revendications précédentes, **caractérisé en ce que** la durée minimale (28) de l'actionnement de l'embrayage dépend du régime moteur.

6. Système (10) de contrôle d'un embrayage (20) mécanique à actionnement motorisé d'un véhicule pour la mise en oeuvre du procédé selon l'une quelconque des revendications précédentes, comprenant :
- une unité de traitement (11) comportant des ressources matérielles et logicielles ;
- un module d'actionnement (20) d'embrayage ;
- un capteur d'information (17),
- l'unité de traitement (11) étant reliée au module d'actionnement (20) d'embrayage, à l'unité de contrôle et audit un capteur d'information (17).

7. Système (10) selon la revendication précédente, **caractérisé en ce qu'**il comprend :
- un premier élément de commande (15), notamment une pédale d'embrayage ;
- un deuxième élément de commande (23), notamment une butée d'embrayage ;
- un premier capteur de position (13) du premier élément de commande (15), et/ou
- un deuxième capteur de position (14) du deuxième élément de commande (23).

## Patentansprüche

1. Kontrollverfahren einer mechanischen Kupplung (20, 21) mit motorisierter Betätigung eines Fahrzeugs, das die folgenden Schritte beinhaltet:
- Bestimmen (40) eines Hauptsollwerts (Cm) zur Ansteuerung der Kupplung (21) anhand einer Betätigung einer Kupplungssteuerung (13);
- Prüfen des Kupplungssollwerts (41) gemäß einem Schwellenwert (29a) für die Kupplungsbetätigung,
- Bestimmen eines Kupplungsbetätigungsprofils (42) gemäß einem Betätigungsschwellenwert (29a) der Steuerung, wobei das Kupplungsbetätigungsprofil eine Dauer der Kupplungsphase gestattet, die größer ist als eine Kupplungsmindestdauer, die in Abhängigkeit von der Motordrehzahl bestimmt wird,
- Anwenden (43) des vordefinierten Kupplungsprofils, falls der Betätigungsschwellenwert (29a) der Kupplungssteuerung überschritten wird.

2. Verfahren nach dem vorhergehenden Anspruch, **dadurch gekennzeichnet, dass** der Kupplungsbetätigungsschwellenwert (29) von der Drehzahl des Motors abhängt.

3. Verfahren nach einem beliebigen der Ansprüche 1 oder 2, **dadurch gekennzeichnet, dass** das vordefinierte Kupplungsbetätigungsprofil (27) von der Drehzahl des Motors abhängt.

4. Verfahren nach einem beliebigen der vorhergehenden Ansprüche, **dadurch gekennzeichnet, dass** das vordefinierte Kupplungsbetätigungsprofil (29) eine Dauer der Kupplungsphase gestattet, die größer ist als die Mindestdauer (28).

5. Verfahren nach einem beliebigen der vorhergehenden Ansprüche, **dadurch gekennzeichnet, dass** die Mindestdauer (28) der Betätigung der Kupplung von der Motordrehzahl abhängt.

6. System (10) zur Kontrolle einer mechanischen Kupplung (20) mit motorisierter Betätigung eines Fahrzeugs zur Umsetzung des Verfahrens nach einem beliebigen der vorhergehenden Ansprüche, beinhaltend:
- eine Verarbeitungseinheit (11), die Hardware- und Software-Ressourcen umfasst;
- ein Kupplungsbetätigungsmodul (20);
- einen Messaufnehmer (17),
- wobei die Verarbeitungseinheit (11) mit dem Kupplungsbetätigungsmodul (20), der Kontrolleinheit und dem Messaufnehmer (17) verbunden ist.

7. System (10) nach dem vorhergehenden Anspruch, **dadurch gekennzeichnet, dass** es Folgendes beinhaltet:
- ein erstes Steuerelement (15), insbesondere ein Kupplungspedal;
- ein zweites Steuerelement (23), insbesondere einen Kupplungsausrücker;
- einen ersten Positionsaufnehmer (13) des ersten Steuerelements (15) und/oder
- einen zweiten Positionsaufnehmer (14) des zweiten Steuerelements (23).

## Claims

1. Method for regulating a mechanical clutch (20, 21), with motorized actuation, of a vehicle, comprising the following steps:
- determining (40) a master setpoint (Cm) for managing the clutch (21) from actuation of a clutch control (13);
- validating the clutch setpoint (41) depending on a clutch actuation speed threshold (29a);
- determining a clutch actuation profile (42) depending on an actuation speed threshold (29a) of the control, the clutch actuation profile authorizing a duration of the clutch phase that is longer than a minimum clutch duration determined as a function of the engine speed,
- applying (43) the predefined clutch profile in the event of the actuation speed threshold (29a) of the clutch control being exceeded.

2. Method according to the preceding claim, **characterized in that** the clutch actuation speed threshold (29) depends on the engine speed.

3. Method according to either one of Claims 1 and 2, **characterized in that** the predefined clutch actuation profile (29) depends on the engine speed.

4. Method according to any one of the preceding claims, **characterized in that** the predefined clutch actuation profile (29) authorizes a duration of the clutch phase that is longer than the minimum duration (28).

5. Method according to any one of the preceding claims, **characterized in that** the minimum duration (28) of the clutch actuation depends on the engine speed.

6. System (10) for controlling a mechanical clutch (20), with motorized actuation, of a vehicle for implementing the method according to any one of the preceding claims, the system comprising:
- a processing unit (11) having hardware and software resources;
- a clutch actuation module (20);
- an information sensor (17),
- the processing unit (11) being connected to the clutch actuation module (20), to the regulating unit and to the said one information sensor (17).

7. System (10) according to the preceding claim, **characterized in that** it comprises:
- a first control element (15), notably a clutch pedal;
- a second control element (23), notably a clutch bearing;
- a first position sensor (13) for the first control element (15), and/or
- a second position sensor (14) for the second control element (23).
